(19) Europäisches Patentamt / European Patent Office / Office européen des brevets

(11) **EP 4 105 543 B1**

(12) **EUROPEAN PATENT SPECIFICATION**

(45) Date of publication and mention
of the grant of the patent:
**19.02.2025 Bulletin 2025/08**

(51) International Patent Classification (IPC):
**F17D 1/16** (2006.01)   **C08L 91/06** (2006.01)
**C10L 1/16** (2006.01)

(21) Application number: **20936318.3**

(22) Date of filing: **10.07.2020**

(52) Cooperative Patent Classification (CPC):
**C10L 10/00; C10L 1/143;** C10L 1/1641;
C10L 1/1824; C10L 1/1826; C10L 1/1852;
C10L 1/1855; C10L 1/1857; C10L 1/2222;
C10L 1/224; C10L 1/2335; C10L 1/2431;
C10L 1/2641; C10L 2230/14; C10L 2290/141;
(Cont.)

(86) International application number:
**PCT/RU2020/000342**

(87) International publication number:
**WO 2021/235970 (25.11.2021 Gazette 2021/47)**

(54) **METHOD OF PRODUCING A DRAG REDUCER**

VERFAHREN ZUR HERSTELLUNG EINES WIDERSTANDSVERMINDERERS

PROCÉDÉ DE PRODUCTION D'ADDITIF ANTI-TURBULENCES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.05.2020 RU 2020116255**

(43) Date of publication of application:
**21.12.2022 Bulletin 2022/51**

(73) Proprietor: **Iris Tech, Inc.
Houston, TX 77002 (US)**

(72) Inventor: **PALEY, Ruslan Vladimirovich
420087 Respublika Tatarstan (RU)**

(74) Representative: **Spengler, Robert
Potthast & Spengler
Patentanwälte PartG mbB
Magirus-Deutz-Straße 12
89077 Ulm (DE)**

(56) References cited:
WO-A1-2010/080317    WO-A1-98/16586
CA-A1- 3 026 542     EA-B1- 001 538
RU-C1- 2 599 245     RU-C1- 2 599 986
RU-C1- 2 606 975     RU-C1- 2 648 079
RU-C1- 2 648 079     RU-C1- 2 667 897
RU-C2- 2 639 301     US-A1- 2020 247 921
US-B2- 7 271 205

(52) Cooperative Patent Classification (CPC): (Cont.)
C10L 2290/24; C10L 2290/46; C10L 2290/48;
C10L 2290/50; C10L 2290/52; C10L 2290/60;
F17D 1/16

**Description**

*Field of the Invention*

This invention is used in the oil and petrochemical industry for the pipeline transport of liquid hydrocarbons, namely, for reducing the hydrodynamic resistance during transportation. The proposed invention relates to drag reducing agents (DRA), which reduce the hydrodynamic drag of a turbulent flow of hydrocarbon fluids in pipelines, that is fast-dissolving and hydrocarbon-soluble dry dispersions (DRA DD) of a high and ultra-high molecular weight (UHMW) (co) polymers, which reduce the hydrodynamic drag in pipelines and containing complex anti-agglomerating agents and other additives.

*State of Art*

There is a method, which involves producing a fine-grained polymer that is soluble in carbonaceous liquids. The polymer is synthesized by (co) polymerization of higher $\alpha$-olefins under the action of a Ziegler-Natta catalyst. The (co) polymer of higher $\alpha$-olefins used is a casting polymerization product. A fine dispersion of the polymer is obtained by thermal re-precipitation of the polymer in a liquid that is nonsolvent for the polymer at room temperature and capable of dissolving it at a higher temperature (see RU 2481357 C1 dtd. 10.05.2013).

The disadvantages of this method for producing a polymer are low commodity form productive capacity, significant energy costs, loss of the spatial structure when a polymer is dissolved at high temperatures, the need for increased dosing of the agent prepared in this way to preserve optimal efficiency.

There is a method of producing a non-aqueous suspension reducing the drag of hydrocarbons in pipelines (see EA 001538 dtd. 15.10.1996), which method involves forming a heat stable, non-aqueous suspension of a solid hydrocarbon soluble polyolefin friction-reducing agent formed from olefines capable of reducing drag in hydrocarbon flowing through conduits, comprising: (a) finely dividing (low temperature) said solid polyolefin in the presence of a partitioning agent to provide a free-flowing polyalphaolefin material coated with said partitioning agent, (b) dispersing the coated polyalphaolefin particles in a substantially non-aqueous suspending medium selected from the group consisting of alcohols containing (<14 carbon atoms), glycols containing (<14 carbon atoms) and dipropylene glycol methyl ether, tripropylene glycol methyl ether, tetrapropylene glycol methyl ether or glycol ethyl ethers, wherein the partitioning agent is a fatty acid wax. Mixtures of simple glycol ethers can be used as suspending agents.

US 7,271,205 discloses a processes for producing polymeric drag reducing agents in a finely divided particulate form based on poly-alpha-olefins, a separating agent, a glycol or glycol ether and a mono-alcohol.

The most similar method by its nature and achieved technical result is a method of producing an agent for reducing hydrodynamic resistance of a hydrocarbon stream (see RU 2599986 dtd. 20.10.2016), which is a stabilized powdered high-molecular poly-alpha-olefin. The method involves polymerization of higher alpha-olefins in a medium of fluorinated organic compounds using a titanium-magnesium catalyst, modified with an electron-donor compound, followed by extraction of powdered polyalphaolefin and stabilization of latter by adding an anti-agglomerating agent. Electron-donor compound is glycol ethers, phthalic acid esters. Synthesis is carried out at a given ratio of components of the system. Agent for reducing hydrodynamic resistance is characterized by component weight ratio, %: poly-alpha-olefin 80-90 %, adhesion reducing powder 10-20 %.

The disadvantage of this method and its analogs is the low energy efficiency of the method since there is the polymerization process interruption in case of reaching an average conversion of 40-95%, the addition of a dispersion medium, including an anti-agglomerating agent, decantation of the polyalphaolefin suspension, washing of the (co) polymer suspension using filter materials, vacuum drying at a temperature of 40-60°C to remove unreacted monomer and residual halogenous organic solvents. The prepared material cannot be used to inject liquid hydrocarbons transported through a pipeline into the flow without a carrier fluid.

The essential difference is the use of a finely dispersed polymer powder with particle size from 10 to 1500 $\mu$m, and its treatment with auxiliary materials from the group of monofunctional heteroatomic organic compounds, preferably higher fatty alcohols, and bifunctional heteroatomic organic compounds, preferably glycol derivatives, with a carbon skeleton value from 3 to 16 units with the following ratio of the components, wt%:

Finely dispersed polyalphaolefin powder - from 75 to 90
Separating agent (anti-agglomerating agent) - from 2 to 15
Monofunctional heteroatomic organic compound with a carbon skeleton value from 3 to 16 units: from 1 to 10,
Bifunctional heteroatomic organic compound with a carbon skeleton value from 3 to 16 units: from 1 to 10.

The product prepared in this way has satisfactory mechanical properties and can be used for injection of a hydrocarbon fluid transported through a pipeline using an apparatus for injection of powder polymer materials.

## Disclosure of the Invention

The invention is defined in the appended claims.

The object of the invention is to prepare a reagent (drag reducing agent) containing a great amount of an active base to reduce the hydrodynamic drag of the flow of liquid hydrocarbons, which reagent can be dosed as a powder.

The technical result of the invention is to prepare a product, which has a 75 wt% active substance that is ultra-high molecular weight polyalphaolefin, which is stable and can be injected into the pipeline for transportation of oil or gas condensate under high pressure using any powder injection apparatus, which makes it possible to reduce the drag of the flow of pumped oil or gas condensate, as well as a to reduce the cost of transporting oil and gas condensate.

The object and the technical result are achieved by preparing a reagent for reducing the hydrodynamic drag of a turbulent flow of liquid hydrocarbons in pipelines that is a drag reducing agent with a great amount of an active base, at least 75 wt% polymer content, by mixing a polymer that has the properties of reducing the hydrodynamic drag of the turbulent flow of liquid hydrocarbons 10 - 1500 microns of size prepared according to any known method, with solvents that do not dissolve it, subject to the following ratio of the components, wt%:

Finely dispersed polyalphaolefin powder - from 75 to 90
Separating agent (anti-agglomerating agent) - from 2 to 15
Monofunctional heteroatomic organic compound with a carbon skeleton value from 3 to 16 units: from 1 to 10,
Bifunctional heteroatomic organic compound with a carbon skeleton value from 3 to 16 units: from 1 to 10.

The polymer is mixed with polymer non-dissolving solvents, preferably using any polymer powder mixing equipment.

In case of the specific embodiment, the polymer powder is mixed with a mixture of glycol with carbon atoms from 2 to 12 and fatty alcohol with carbon atoms from 4 to 16 in the ratio of polymer powder/mixture of glycol and fatty alcohol: 85 parts by weight/15 parts by weight.

The product prepared according to the described method is preferably injected into the flow of hydrocarbon fluid transported through the pipeline using the injection apparatus that mechanically moves the product through the screw auger or screw feeder, for example, a screw extruder for polymeric materials, either directly into the flow of a hydrocarbon fluid or into an intermediate container for mixing the material with the liquid of the flow and by flowing the prepared mixture into the main flow of the pipeline.

## Invention Embodiment

This section describes the main embodiment of the invention, which, however, does not limit other possible embodiments explicitly described in the application materials and apparent for a person skilled in the art.

The method for preparation of a reagent reducing the hydrodynamic drag of a turbulent flow of liquid hydrocarbons in pipelines is realized according to the following main procedure.

This method includes the use of a primary polymer reducing the hydrodynamic drag of the flow of liquid hydrocarbons, which is prepared, for example, according to a method described in patent RU 2648079 C1 (publ. on 22.03.2018, journal No. 9), in which polymer (UHMPAO) with a molecular weight of $1 \cdot 10^7$-$2 \cdot 10^7$ a.m.u., molecular weight distribution less than 1.5, conversion above 90 wt % is prepared, which makes it possible to reduce grinding related energy costs, for example, in liquid nitrogen at a temperature not above minus 65 and not below minus 120 deg. Celsius, in the process of preparation of dry polymer dispersions with a concentration of more than 75 wt% in a mixture with polymer non-dissolving solvents for drag reducing agents, protect the polymer against the oxidative degradation during storage, reduce significantly the cost price of the reagents reducing the hydrodynamic drag of oil and oil products prepared according to the proposed method and transported through pipelines.

The polymer blocks prepared according to patent RU 2648079 C1 are ground to the required size using proper cryogenic grinding equipment, and then mixed with polymer non-dissolving solvents, preparing a product with a polymer content of at least 75 wt%, which is fed into the flow of the hydrocarbon fluid pumped through the pipeline using an adapted injection apparatus for polymer powders.

Alpha-olefins C6-C14, preferably hex-1-ene, oct-1-ene, dec-1-ene, dodec-1-ene, tetradec-1-ene, and mixtures thereof, even more preferably hex-1-ene, dec-1-ene, dodec-1-ene, and mixtures thereof containing at least 70 wt% of basic alpha-olefin, are used as monomers to prepare the polymer blocks.

The mixtures of a monofunctional heteroatomic organic compound (MHOC) and a bifunctional heteroatomic organic compound (BHOC) are used as a polymer non-dissolving solvent, in which organic compounds containing oxygen, nitrogen as a heteroatom can be used as the MHOC that is isomers of propanol, butanol, pentanol, hexanol, heptanol, octanol, nonanol, decanol, undecanol, dodecanol, tridecanol, tetradecanol, pentadecanol, hexadecanol, isomers of tripropylamine, tributylamine, tripentylamine, trihexylamine, triheptylamine, trioctylamine, trinonylamine, tridecylamine. triundecylamine, tridodecylamine, tritridecylamine, tritetradecylamine, tripentadecylamine, trihexadecylamine; organic compounds containing oxygen, nitrogen, sulfur, phosphorus as a heteroatom can be used as the BHOC that is tripropyl phosphate, tributyl phosphate, tripentyl phosphate, propylene glycol, butylene glycol, butyl cellosolve, hexylene glycol, ethyl cellosolve, texanol, diethylene glycol, triethylene glycol, isophorone, morpholine, dioxane, dimethyl sulphoxide, dimethylformamide.

For mechanical mixing of the polymer powder with polymer non-dissolving solvents, any mixers for polymer powders can be used, for example, Pallmann Maschinenfabrik GmbH & Co KG (Germany), OOO Sibprommash (the Russian Federation, Novosibirsk).

For dosing a product containing great, not less than 75 wt% of polymer, injection apparatus can be used that mechanically move the product through a screw auger or screw feeder made by Kinematica AG (Switzerland), IKA-WERKE GmbH & Co. KG (Germany), Krauss Maffei Berstorff AG (Germany) extruders or analogs.

The method for preparation of a reagent for reducing the hydrodynamic drag of a flow of liquid hydrocarbons in pipelines is illustrated by the embodiments given below, but not limited to them.

Embodiment 1 (similar to RU2599986)

Heat a three-necked 250-ml flask equipped with an argon-vacuum line and a mechanical stirrer in a vacuum for 5-10 minutes. Place in a flask cooled with ice-water to 12-14 ° C, 40 ml (71.37 g) of perfluoromethylcyclohexane, 80 ml (54.24 g) of hexene-1, 0.5 ml of TIBA (4M), and 0.2 ml the catalyst prepared according to the following procedure: place 5 g (44 mmol) of magnesium ethylate, 40 ml of absolute toluene, 10 ml of titanium tetrachloride and 0.95 ml (0.80 g, 5 mmol) of dimethyl ether of 2.2- diethylpropanediol-1,3 in a 100 ml flask with a magnetic stirrer in a stream of argon. Heat the mixture to 115 °C (external temperature in the bath) for 2 hours with stirring. Then decant the liquid layer, wash the precipitate with $2\times40$ ml of toluene at 40 °C. After washing, place 40 ml of absolute toluene, 8 ml of titanium tetrachloride in the flask and heat the mixture to 115 °C for 1.5 hours with stirring. Next, wash the precipitate with $10\times40$ ml of 70/100 petroleum ether at 55 °C, and suspend the precipitate in 40 ml of 70/100 petroleum ether. 50 ml of a suspension of a catalyst with a titanium concentration of 0.06 mol/L is prepared.

Stir the mixture for 4 hours and then warm to room temperature (~5 min) and add a suspension of 4.5 g of calcium stearate in 41 g of butyl cellosolve. Stir the mixture vigorously for 20 minutes, stop the stirring, and decant the perfluoromethylcyclohexane precipitate in 10 minutes. Distill off the residues of perfluoromethylcyclohexane and monomer in vacuo. Then wash the product twice with 20 ml of acetone, filter, and dry. The mass of the prepared polymer powder is 41.68 g (69% conversion). The mass fraction of polymer is 89.2%.

Embodiment 2

The polymer is prepared according to the following procedure of RU 2648079 C1. Load hex-1-en in the amount of 75 wt%, dec-1-ene in the amount of 10 wt%, decalin with a purity of not less than 99.8 wt% in the amount of 11.91 wt%, cyclooctadecane with a purity of not less than 99.8 in the amount of 3.00 wt% in a reactor with a jacket, stirrer, thermocouple, pressure gauge, the supply of nitrogen gas with a purity of 99.9 wt%. Cool the mixture in the reactor in a stream of nitrogen to a temperature of plus $10 \pm 2$ °C by stirring with a stirrer and supplying a coolant to the reactor jacket. Then, feed the catalyst activator into the reactor in the form of a mixture of diethylaluminium chloride and triisobutylaluminum with a mass ratio of 1:1 in the amount of 0.077 wt% (at 0.0385 wt% each) and the catalyst is titanium trichloride in the amount of 0.013 wt% in the form of a suspension with a concentration of 40 wt% in heptane. Stir the contents of the reactor, keeping the temperature in the range from plus 8 to plus 12 °C, for 1 h. Next, discharge the reaction mass in a stream of nitrogen into sealed gas-tight containers with polyethylene liners so that the height of the mass layer does not exceed 250 mm or discharge into similar polymer containers, hermetically seal, and keep the containers at a temperature of $15\pm5$ °C for at least 15 days without access to an air atmosphere. Crush the resulting polymer blocks subsequently using a cascade of knife mills into particles of $50 \pm 40$ mm, $3\pm2$ mm, and $0.8\pm0.7$ mm in size. Carry out the last grinding in a medium consisting of liquid nitrogen over 15 wt% calcium stearate. Add to the prepared polymer powder, polymer non-solving solvent consisting of a mixture of isopropanol, ethylene glycol in a ratio of 8:2 by weight, preparing a reagent to reduce the hydrodynamic resistance of the flow of oil and oil products in pipelines - a stable fine dispersion with a polymer content of $80\pm5$ wt%.

Embodiment 3

The polymer is prepared according to the following procedure of RU 2648079 C1. Load hex-1-ene in the amount of 84 wt%, tetradecene-1 in the amount of 5 wt%, dodecane with a purity of not less than 99.8 wt% in the amount of 5.91 wt%, cyclooctane with a purity of not less than 99.8 wt% in the amount of 5.00 wt% in a reactor with a jacket, stirrer, thermocouple, pressure gauge, the supply of nitrogen gas with a purity of 99.9 wt%. Cool the mixture in the reactor to a temperature of plus 10 ± 2 °C by stirring with a stirrer and applying cold coolant to the jacket of the reactor. Then, feed the catalyst activator into the reactor in the form of a mixture of diethylaluminium chloride and triisobutylaluminum with a mass ratio of 1:1 in the amount of 0.077 wt% (at 0.0385 wt% each) and the catalyst is titanium trichloride in the amount of 0.013 wt% in the form of a suspension with a concentration of 40 wt% in heptane. Stir the contents of the reactor, keeping the temperature in the range from plus 8 to plus 12 °C for 1 h. Next, unload the reaction mass in a stream of nitrogen into sealed gas-tight containers with polyethylene liners so that the height of the mass layer does not exceed 250 mm, or hermetically seal and hold similar in size polymer containers at a temperature of 15 ± 5 °C for at least 15 days without access to an air atmosphere. Crush the resulting polymer blocks subsequently using a cascade of knife mills into particles of 50±40 mm, 3 ±2 mm, and 0.8±0.7 mm in size. Carry out the last grinding in a medium consisting of liquid nitrogen over 15 wt% calcium stearate. Add to the prepared polymer powder, polymer non-solving solvent consisting of a mixture of butyl cellosolve and ethylene glycol in the ratio of 6:4 by weight, preparing a reagent to reduce the hydrodynamic resistance of the flow of oil and oil products in pipelines - a stable fine dispersion with a polymer content 80±5 wt%.

Embodiment 4

The polymer is prepared according to the following procedure of RU 2648079 C1. Load hex-1-en in the amount of 80 wt%, decen-1 in the amount of 5 wt%, decalin with a purity of not less than 99.8 wt% in the amount of 14.81 wt%, cyclooctadecylcyclooctadecane with a purity of not less than 99.8 wt% in the amount of 0.1 wt% in a reactor with a jacket, stirrer, thermocouple, pressure gauge, the supply of nitrogen gas with a purity of 99.9 wt%. Cool the mixture in the reactor to a temperature of plus 10±2 °C by stirring with a stirrer and applying cold coolant to the jacket of the reactor. Then, feed the catalyst activator into the reactor in the form of a mixture of diethylaluminium chloride and triisobutylaluminum with a mass ratio of 10:1 in the amount of 0.077 wt% (0.07 wt% and 0.007 wt%, respectively) and the catalyst is titanium trichloride in the amount of 0.013 wt% in the form of a suspension with a concentration of 40 wt% in heptane. Stir the contents of the reactor, keeping the temperature in the range from plus 8 to plus 12 °C for 1 h. Next, unload the reaction mass in a stream of nitrogen into sealed gas-tight containers with polyethylene liners so that the height of the mass layer does not exceed 250 mm, or seal similar in size polymer containers hermetically and hold at a temperature of 15 ± 5 °C for at least 15 days without access to an air atmosphere. Crush the resulting polymer blocks subsequently using a cascade of knife mills into particles of 50±40 mm, 3±2 mm, and 0.8±0.7 mm in size. Carry out the last grinding in a medium consisting of liquid nitrogen over 15 wt% calcium stearate. Add to the prepared polymer powder, polymer non-solving solvent consisting of a mixture of ethyl cellosolve and propylene glycol in the ratio of 5:5 by weight, preparing a reagent to reduce the hydrodynamic resistance of the flow of oil and oil products in pipelines - a stable fine dispersion with a polymer content 80±5 wt%.

Embodiment 5

The polymer is prepared according to the following procedure of RU 2648079 C1. Load hex-1-en in the amount of 80 wt%, dec-1-ene in the amount of 5 wt%, decane with a purity of not less than 99.8 wt% in the amount of 12.91 wt%, cyclohexadecane with a purity of not less than 99.7 wt% in the amount of 2.00 wt% in a reactor with a jacket, stirrer, thermocouple, pressure gauge, the supply of nitrogen gas with a purity of 99.9 wt%. Cool the mixture in the reactor to a temperature of plus 10±2 °C by stirring with a stirrer and applying cold coolant to the jacket of the reactor. Then, feed the catalyst activator into the reactor in the form of a mixture of diethylaluminium chloride and triisobutylaluminum with a mass ratio of 1:10 in the amount of 0.077 wt% (0.007 wt% and 0.07 wt%, respectively), and the catalyst is titanium trichloride in the amount of 0.013 wt% in the form of a suspension with a concentration of 40 wt% in heptane. Stir the contents of the reactor, keeping the temperature in the range from plus 8 to plus 12 °C, for 1 h. Then discharge the reaction mass in a stream of nitrogen into sealed gas-tight containers with polyethylene liners so that the height of the mass layer does not exceed 250 mm or discharge into similar polymer containers, hermetically seal, and keep the containers at a temperature of 15±5 °C for at least 15 days without access to an air atmosphere. Crush the resulting polymer blocks subsequently using a cascade of knife mills into particles of 50±40 mm, 3±2 mm, and 0.8±0.7 mm in size. Carry out the last grinding in a medium consisting of liquid nitrogen over 15 wt% calcium stearate. Add to the prepared polymer powder, polymer non-solving solvent consisting of a mixture of octanol and ethylene glycol in the ratio of 8:2 by weight, preparing a reagent to reduce the hydrodynamic resistance of the flow of oil and oil products in pipelines - a stable fine dispersion with a polymer content 80±5 wt%.

Embodiment 6

The polymer is prepared according to the following procedure of RU 2648079 C1. Load octene-1 in the amount of 80 wt%, hexene-1 in the amount of 15 wt%, decane with a purity of not less than 99.8 wt% in the amount of 2.91 wt%, cyclotetradecylcyclohexadecane with a purity of not less than 99.8 wt% in the amount of 2.00 wt% in a reactor with a jacket, stirrer, thermocouple, pressure gauge, the supply of nitrogen gas with a purity of 99.9 wt%. Cool the mixture in the reactor to a temperature of plus 10±2 °C by stirring with a stirrer and applying cold coolant to the jacket of the reactor. Then, feed the catalyst activator into the reactor in the form of a mixture of diethylaluminium chloride and triisobutylaluminum with a mass ratio of 1:1 in the amount of 0.077 wt% (at 0.0385 wt% each) and the catalyst is titanium trichloride in the amount of 0.013 wt% in the form of a suspension with a concentration of 40 wt% in heptane. Stir the contents of the reactor, keeping the temperature in the range from plus 8 to plus 12 °C, for 1 h. Then discharge the reaction mass in a stream of nitrogen into sealed gas-tight containers with polyethylene liners so that the height of the mass layer does not exceed 250 mm or discharge into similar polymer containers, hermetically seal, and keep the containers at a temperature of 15±5 °C for at least 15 days without access to an air atmosphere. Crush the resulting polymer blocks subsequently using a cascade of knife mills into particles of 50±40 mm, 3±2 mm, and 0.8±0.7 mm in size. Carry out the last grinding in a medium consisting of liquid nitrogen over 15 wt% calcium stearate. Add to the prepared polymer powder, polymer non-solving solvent consisting of a mixture of phosphonobutane and ethylene glycol in the ratio of 4:6 by weight, preparing a reagent to reduce the hydrodynamic resistance of the flow of oil and oil products in pipelines - a stable fine dispersion with a polymer content 80±5 wt%.

Embodiment 7

The polymer is prepared according to the following procedure of RU 2648079 C1. Load hex-1-ene in the amount of 70 wt%, dodec-1-ene in the amount of 5 wt%, hexadecane with a purity of not less than 99.8 wt% in the amount of 19.908 wt%, cyclooctane with a purity of not less than 99.8 wt% in the amount of 5.00 wt% in a reactor with a jacket, stirrer, thermocouple, pressure gauge, the supply of nitrogen gas with a purity of 99.9 wt%. Cool the mixture in the reactor to a temperature of plus 10±2 °C by stirring with a stirrer and applying cold coolant to the jacket of the reactor. Then, feed the catalyst activator into the reactor in the form of a mixture of diethylaluminium chloride and triisobutylaluminum with a mass ratio of 1:1 in the amount of 0.077 wt% (at 0.0385 wt% each) and the catalyst is titanium trichloride in the amount of 0.015 wt% in the form of a suspension with a concentration of 40 wt% in heptane. Stir the contents of the reactor, keeping the temperature in the range from plus 8 to plus 12 °C, for 1 h. Then discharge the reaction mass in a stream of nitrogen into sealed gas-tight containers with polyethylene liners so that the height of the mass layer does not exceed 250 mm or discharge into similar polymer containers, hermetically seal, and keep the containers at a temperature of 15 ± 5 °C for at least 15 days without access to an air atmosphere. Crush the resulting polymer blocks subsequently using a cascade of knife mills into particles of 50±40 mm, 3±2 mm, and 0.8±0.7 mm in size. Carry out the last grinding in a medium consisting of liquid nitrogen over 15 wt% calcium stearate. Add to the prepared polymer powder, polymer non-solving solvent consisting of a mixture of n-butanol and ethylene glycol in the ratio of 8:2 by weight, preparing a reagent to reduce the hydrodynamic resistance of the flow of oil and oil products in pipelines - a stable fine dispersion with a polymer content 80 ±5 wt%.

Embodiment 8

The polymer is prepared according to the following procedure of RU 2648079 C1. Load dodec-1-ene in the amount of 90 wt%, dec-1-ene in the amount of 5 wt%, decane with a purity of not less than 99.8 wt% in the amount of 2.92 wt%, cyclohexadecane with a purity of not less than 99.8 wt% in the amount of 2.00 wt% in a reactor with a jacket, stirrer, thermocouple, pressure gauge, the supply of nitrogen gas with a purity of 99.9 wt%. Cool the mixture in the reactor to a temperature of plus 10±2 °C by stirring with a stirrer and applying cold coolant to the jacket of the reactor. Then, feed the catalyst activator into the reactor in the form of a mixture of diethylaluminium chloride and triisobutylaluminum with a mass ratio of 1:1 in the amount of 0.077 wt% (0.0385 wt% each) and a catalyst - titanium trichloride - in the amount of 0.003 wt% in the form of a suspension with a concentration of 40 wt% in heptane. Stir the contents of the reactor, keeping the temperature in the range from plus 8 to plus 12 °C, for 1 h. Then discharge the reaction mass in a stream of nitrogen into sealed gas-tight containers with polyethylene liners so that the height of the mass layer does not exceed 250 mm or discharge into similar polymer containers, hermetically seal, and keep the containers at a temperature of 15 ± 5 °C for at least 15 days without access to an air atmosphere. Crush the resulting polymer blocks subsequently using a cascade of knife mills into particles of 50±40 mm, 3±2 mm, and 0.8±0.7 mm in size. Carry out the last grinding in a medium consisting of liquid nitrogen over 15 wt% calcium stearate. Add to the prepared polymer powder, polymer non-solving solvent consisting of a mixture of 1-hexanol and propylene glycol in the ratio of 5:5 by weight, preparing a reagent to reduce the hydrodynamic resistance of the flow of oil and oil products in pipelines - a stable fine dispersion with a polymer content 80 ±5 wt%.

The method of injection of a drag reducing agent with a great amount of an active base into the flow of hydrocarbon fluid transported through the pipeline is realized according to the following main procedure.

Feed the reagent (DRA) prepared according to the above method into mixer hopper 101 equipped with a stirrer and a loading unit in screw feeder 102. Then feed the reagent (DRA) from mixer hopper 101 into screw feeder 102, which ensures feeding of the reagent into preparation tank 103, in which the prepared reagent is dissolved. There is a unit for hydrocyclone mixing (hydrocyclone mixer 104) of the reagent with a hydrocarbon fluid and check valve 105 before preparation tank 103. While going through hydrocyclone mixer 104, the reagent is mixed with the hydrocarbon fluid supplied from pipeline 106 through valve 107, inlet flow meter 108, pressure reducing valve 109. Then, dissolve the reagent in preparation tank 103 until it is homogeneous. The prepared slurry is supplied from preparation tank 103 through supply flow meter 110 to the pipeline using gear pump 111 installed in-line. To prevent the reverse flow of the hydrocarbon fluid from the pipeline to preparation tank 103 in case of stopping the pump or repair of the station, the supply line is equipped with back valve 112 and valve 113. Regulate the dosing of the reagent by turns of screw feeder 102 and control by the mass difference of liquids going through inlet flow meter 108 and supply flow meter 110.

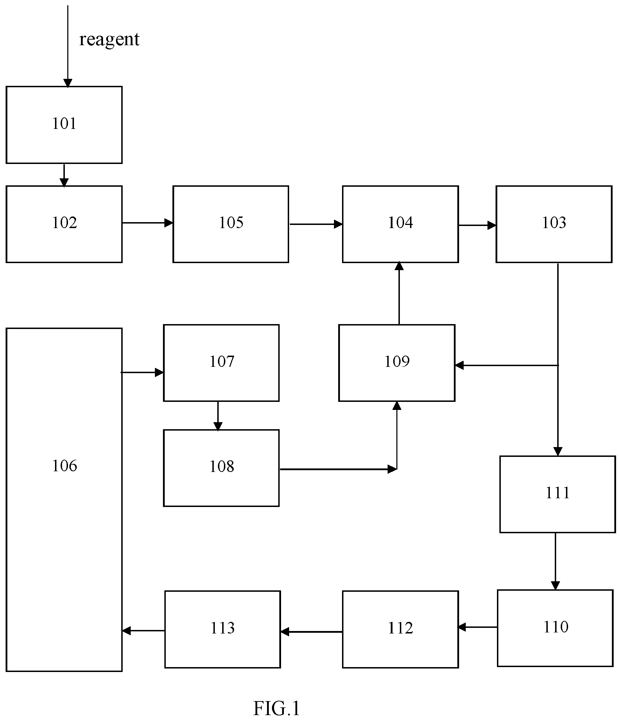

The above dosing scheme is given in Figure 1 (Fig. 1).

Assess the efficiency of the prepared products at a laboratory turborheometer (see Table). The drag reduction (DR) of the flow petroleum solvent in the capillary by the reagent was calculated according to the formula:

$$DR = \frac{\lambda_o - \lambda_p}{\lambda_o} = \frac{t_0^2 - t_p^2}{t_0^2};$$

where

$\lambda$ is a coefficient of liquid drag;
t is a time of flow of 330 cm3 of the petroleum solvent through the capillary
o and p are indices related to the pure solvent and reagent solution, respectively.

The product passes the test if the DR value is at least 30% at the reagent concentration in the petroleum solvent making 2.5 ppm.

Table

| Embodiment No. | Conversion, wt% | The polymer concentration in the reagent, wt% | DR value, %, at the concentration of the reagent in the petroleum solvent making 2.5 ppm | Reagent pour point, °C (GOST 20287) |
|---|---|---|---|---|
| Embodiment 1, analog | 69.0 | 30 | 42.0 | - 60 |
| Embodiment 2 | 98.5 | 78 | 41.0 | -85 |
| Embodiment 3 | 98.0 | 75 | 40.0 | -85 |
| Embodiment 4 | 97.0 | 80 | 44.0 | -85 |
| Embodiment 5 | 98.5 | 78 | 41.0 | -85 |
| Embodiment 6 | 98.0 | 81 | 44.0 | -85 |
| Embodiment 7 | 99.0 | 79 | 43.0 | -85 |
| Embodiment 8 | 98.5 | 77 | 42.0 | -85 |

As follows from the above embodiments and table, it may be concluded that the claimed method, if compared to the analogs including the closest one, makes it possible to prepare a reagent, which is the most effective for the reduction of a hydrodynamic drag of a turbulent flow of liquid hydrocarbons in pipelines, and as a result, ensures the ramp-up, and reduction in expenses for transporting a hydrocarbon fluid.

## Claims

1. A method for the preparation of a reagent for reducing the hydrodynamic drag of turbulent flow of liquid hydrocarbons in pipelines, **characterized by** a high polymer content of at least 75 wt%, comprising mixing a polyalphaolefin powder reducing the hydrodynamic drag of turbulent flow of liquid hydrocarbons with polymer non-solving solvents and a separating agent (anti-agglomerating agent),

   wherein the polymer non-solving solvents are a mixture of a monofunctional heteroatomic organic compound with carbon atoms from 3 to 16, and a bifunctional heteroatomic organic compound with carbon atoms from 2 to 16, with the following ratio of the components, wt%:

| | |
|---|---|
| polyalphaolefin powder | from 75 to 90 |
| separating agent | from 2 to 15 |
| monofunctional heteroatomic organic compound with the number of carbon atoms from 3 to 16 | from 1 to 10, |
| bifunctional heteroatomic organic compound with the number of carbon atoms from 2 to 16 | from 1 to 10, |

wherein the monofunctional heteroatomic organic compound is at least one of isomers of propanol, butanol, pentanol, hexanol, heptanol, octanol, nonanol, decanol, undecanol, dodecanol, tridecanol, tetradecanol, pentadecanol, hexadecanol, isomers of tripropylamine, tributylamine, tripentylamine, trihexylamine, triheptylamine, trioctylamine, trinonylamine, tridecylamine, triundecylamine, tridodecylamine, tritridecylamine, tritetradecylamine, tripentadecylamine, trihexadecylamine,

wherein the bifunctional heteroatomic organic compound is at least one of tripropyl phosphate, tributyl phosphate, tripentyl phosphate, propylene glycol, butylene glycol, butyl cellosolve, hexylene glycol, ethyl cellosolve, texanol, diethylene glycol, triethylene glycol, isophorone, morpholine, dioxane, dimethyl sulphoxide, dimethylformamide.

2. The method of claim 1, wherein the polyalphaolefin powder and the mixture of monofunctional heteroatomic organic compound and bifunctional heteroatomic organic compound are taken in the ratio 85 parts by weight/15 parts by weight.

3. A powder reagent reducing the hydrodynamic drag of turbulent flow of liquid hydrocarbons in pipelines comprising the following components, wt%:

| | |
|---|---|
| polyalphaolefin powder | from 75 to 90 |
| separating agent | from 2 to 15 |
| monofunctional heteroatomic organic compound with the number of carbon atoms from 3 to 16 | from 1 to 10 |
| bifunctional heteroatomic organic compound with the number of carbon atoms from 2 to 16 | from 1 to 10, |

wherein the monofunctional heteroatomic organic compound is at least one of isomers of propanol, butanol, pentanol, hexanol, heptanol, octanol, nonanol, decanol, undecanol, dodecanol, tridecanol, tetradecanol, pentadecanol, hexadecanol, isomers of tripropylamine, tributylamine, tripentylamine, trihexylamine, triheptylamine, trioctylamine, trinonylamine, tridecylamine, triundecylamine, tridodecylamine, tritridecylamine, tritetradecylamine, tripentadecylamine, trihexadecylamine,

wherein the bifunctional heteroatomic organic compound is at least one of tripropyl phosphate, tributyl phosphate, tripentyl phosphate, propylene glycol, butylene glycol, butyl cellosolve, hexylene glycol, ethyl cellosolve, texanol, diethylene glycol, triethylene glycol, isophorone, morpholine, dioxane, dimethyl sulphoxide, dimethylformamide.

4. A method for reduction of the hydrodynamic drag of turbulent flow of liquid hydrocarbons in pipelines comprising injection of the reagent of claim 3 into the flow of hydrocarbon fluid transported through the pipeline, wherein injection of the reagent is performed by means of an injection apparatus for polymer powders.

5. The method of claim 4, wherein the reagent is dissolved in the hydrocarbon fluid before it is injected into the pipeline.

6. A method for injection of the reagent of claim 3 into the flow of a hydrocarbon fluid transported through a pipeline, wherein the reagent is fed into a mixer hopper, then the reagent with the hydrocarbon fluid, which is supplied from the pipeline through a valve, a flow meter, and a pressure reducing valve goes from a screw feeder through a hydro cyclone mixer and a back valve to a preparation tank for dissolving the reagent, then the dissolved reagent is fed through the flow meter using a gear pump back into the pipeline.

**Patentansprüche**

1. Verfahren zur Herstellung eines Reagens zum Reduzieren des hydrodynamischen Widerstands von turbulenter Strömung von flüssigen Kohlenwasserstoffen in Rohrleitungen, **gekennzeichnet durch** einen hohen Polymergehalt von mindestens 75 Gewichts-%, umfassend ein Mischen eines Polyalphaolefinpulvers, das den hydrodynamischen Widerstand von turbulenter Strömung von flüssigen Kohlenwasserstoffen reduziert, mit polymernichtlösenden Lösungsmitteln und einem Trennmittel (Antiagglomerationsmittel),

   wobei die polymernichtlösenden Lösungsmittel ein Gemisch aus einer monofunktionellen heteroatomaren organischen Verbindung mit Kohlenstoffatomen von 3 bis 16 und einer bifunktionellen heteroatomaren organischen Verbindung mit Kohlenstoffatomen von 2 bis 16 sind, mit folgendem Verhältnis der Komponenten, in Gewichts-%:

   | | |
   |---|---|
   | Polyalphaolefinpulver | von 75 bis 90 |
   | Trennmittel | von 2 bis 15 |
   | monofunktionelle heteroatomare organische Verbindung mit der Anzahl von Kohlenstoffatomen von 3 bis 16 | von 1 bis 10, |
   | bifunktionelle heteroatomare organische Verbindung mit der Anzahl von Kohlenstoffatomen von 2 bis 16 | von 1 bis 10, |

   wobei die monofunktionelle heteroatomare organische Verbindung mindestens eines der Isomere von Propanol, Butanol, Pentanol, Hexanol, Heptanol, Octanol, Nonanol, Decanol, Undecanol, Dodecanol, Tridecanol, Tetradecanol, Pentadecanol, Hexadecanol, Isomere von Tripropylamin, Tributylamin, Tripentylamin, Trihexylamin, Triheptylamin, Trioctylamin, Trinonylamin, Tridecylamin, Triundecylamin, Tridodecylamin, Tritridecylamin, Tritetradecylamin, Tripentadecylamin, Trihexadecylamin ist,
   wobei die bifunktionelle heteroatomare organische Verbindung mindestens eines von Tripropylphosphat, Tributylphosphat, Tripentylphosphat, Propylenglykol, Butylenglykol, Butylcellosolve, Hexylenglykol, Ethylcellosolve, Texanol, Diethylenglykol, Triethylenglykol, Isophoron, Morpholin, Dioxan, Dimethylsulfoxid, Dimethylformamid ist.

2. Verfahren nach Anspruch 1, wobei das Polyalphaolefinpulver und das Gemisch aus monofunktioneller heteroatomarer organischer Verbindung und bifunktioneller heteroatomarer organischer Verbindung im Verhältnis 85 Gewichtsteile/15 Gewichtsteile genommen werden.

3. Pulverförmiges Reagens, das den hydrodynamischen Widerstand von turbulenter Strömung von flüssigen Kohlenwasserstoffen in Rohrleitungen reduziert, umfassend die folgenden Komponenten, in Gewichts-%:

   | | |
   |---|---|
   | Polyalphaolefinpulver | von 75 bis 90 |
   | Trennmittel | von 2 bis 15 |
   | monofunktionelle heteroatomare organische Verbindung mit der Anzahl von Kohlenstoffatomen von 3 bis 16 | von 1 bis 10, |
   | bifunktionelle heteroatomare organische Verbindung mit der Anzahl von Kohlenstoffatomen von 2 bis 16 | von 1 bis 10, |

   wobei die monofunktionelle heteroatomare organische Verbindung mindestens eines der Isomere von Propanol, Butanol, Pentanol, Hexanol, Heptanol, Octanol, Nonanol, Decanol, Undecanol, Dodecanol, Tridecanol, Tetradecanol, Pentadecanol, Hexadecanol, Isomere von Tripropylamin, Tributylamin, Tripentylamin, Trihexylamin, Triheptylamin, Trioctylamin, Trinonylamin, Tridecylamin, Triundecylamin, Tridodecylamin, Tritridecylamin, Tritetradecylamin, Tripentadecylamin, Trihexadecylamin ist,
   wobei die bifunktionelle heteroatomare organische Verbindung mindestens eines von Tripropylphosphat, Tributylphosphat, Tripentylphosphat, Propylenglykol, Butylenglykol, Butylcellosolve, Hexylenglykol, Ethylcellosolve, Texanol, Diethylenglykol, Triethylenglykol, Isophoron, Morpholin, Dioxan, Dimethylsulfoxid, Dimethylformamid ist.

4. Verfahren zur Verringerung des hydrodynamischen Widerstands von turbulenter Strömung von flüssigen Kohlenwasserstoffen in Rohrleitungen, umfassend eine Injektion des Reagens nach Anspruch 3 in die Strömung von Kohlenwasserstofffluid, das durch die Rohrleitung transportiert wird, wobei die Injektion des Reagens mittels einer Injektionsvorrichtung für Polymerpulver durchgeführt wird.

5. Verfahren nach Anspruch 4, wobei das Reagens in dem Kohlenwasserstofffluid gelöst wird, bevor es in die Rohrleitung injiziert wird.

6. Verfahren zur Injektion des Reagens nach Anspruch 3 in die Strömung eines Kohlenwasserstofffluids, das durch eine Rohrleitung transportiert wird, wobei das Reagens in einen Mischertrichter gespeist wird, dann das Reagens mit dem Kohlenwasserstofffluid, das von der Rohrleitung durch ein Ventil, einen Durchflussmesser und ein Druckminderungsventil zugeführt wird, von einem Schneckenzuführer durch einen Hydrozyklonmischer und ein Rückschlagventil zu einem Aufbereitungstank zum Lösen des Reagens verläuft, dann das gelöste Reagens durch den Durchflussmesser unter Verwendung einer Zahnradpumpe zurück in die Rohrleitung gespeist wird.

**Revendications**

1. Procédé de préparation d'un réactif destiné à réduire la traînée hydrodynamique d'un écoulement turbulent d'hydrocarbures liquides dans des canalisations, **caractérisé par** une teneur élevée en polymère d'au moins 75 % en poids, comprenant le mélange d'une poudre de polyalphaoléfine réduisant la traînée hydrodynamique d'un écoulement turbulent d'hydrocarbures liquides avec des solvants non dissolvants de polymère et un agent de séparation (agent antiagglomérant),

dans lequel les solvants non dissolvants de polymère sont un mélange d'un composé organique hétéroatomique monofonctionnel avec 3 à 16 atomes de carbone, et d'un composé organique hétéroatomique bifonctionnel avec 2 à 16 atomes de carbone, avec le rapport suivant des composants, en % en poids :

| | |
|---|---|
| poudre de polyalphaoléfine | de 75 à 90 |
| agent de séparation | de 2 à 15 |
| composé organique hétéroatomique monofonctionnel avec un nombre d'atomes de carbone de 3 à 16 | de 1 à 10, |
| composé organique hétéroatomique bifonctionnel avec un nombre d'atomes de carbone de 2 à 16 | de 1 à 10, |

dans lequel le composé organique hétéroatomique monofonctionnel est au moins l'un parmi des isomères de propanol, butanol, pentanol, hexanol, heptanol, octanol, nonanol, décanol, undécanol, dodécanol, tridécanol, tétradécanol, pentadécanol, hexadécanol, des isomères de tripropylamine, tributylamine, tripentylamine, trihexylamine, triheptylamine, trioctylamine, trinonylamine, tridécylamine, triundécylamine, tridodécylamine, tritridécylamine, tritétradécylamine, tripentadécylamine, trihexadécylamine,
dans lequel le composé organique hétéroatomique bifonctionnel est au moins l'un parmi le tripropylphosphate, le tributylphosphate, le tripentylphosphate, le propylène glycol, le butylène glycol, le butylcellosolve, l'hexylène glycol, l'éthylcellosolve, le texanol, le diéthylène glycol, le triéthylène glycol, l'isophorone, la morpholine, le dioxane, le diméthylsulfoxyde, le diméthylformamide.

2. Procédé selon la revendication 1, dans lequel la poudre de polyalphaoléfine et le mélange de composé organique hétéroatomique monofonctionnel et de composé organique hétéroatomique bifonctionnel sont utilisés dans un rapport de 85 parties en poids/15 parties en poids.

3. Réactif en poudre réduisant la traînée hydrodynamique de l'écoulement turbulent d'hydrocarbures liquides dans des canalisations comprenant les composants suivants, en % en poids :

| | |
|---|---|
| poudre de polyalphaoléfine | de 75 à 90 |
| agent de séparation | de 2 à 15 |
| composé organique hétéroatomique monofonctionnel avec un nombre d'atomes de carbone de 3 à 16 | de 1 à 10 |

(continued)

composé organique hétéroatomique bifonctionnel avec un nombre d'atomes de carbone de 2 à 16          de 1 à 10,

dans lequel le composé organique hétéroatomique monofonctionnel est au moins l'un parmi des isomères de propanol, butanol, pentanol, hexanol, heptanol, octanol, nonanol, décanol, undécanol, dodécanol, tridécanol, tétradécanol, pentadécanol, hexadécanol, des isomères de tripropylamine, tributylamine, tripentylamine, trihexylamine, triheptylamine, trioctylamine, trinonylamine, tridécylamine, triundécylamine, tridodécylamine, tritridécylamine, tritétradécylamine, tripentadécylamine, trihexadécylamine,

dans lequel le composé organique hétéroatomique bifonctionnel est au moins l'un parmi le tripropylphosphate, le tributylphosphate, le tripentylphosphate, le propylène glycol, le butylène glycol, le butylcellosolve, l'hexylène glycol, l'éthylcellosolve, le texanol, le diéthylène glycol, le triéthylène glycol, l'isophorone, la morpholine, le dioxane, le diméthylsulfoxyde, le diméthylformamide.

4. Procédé de réduction de la traînée hydrodynamique d'un écoulement turbulent d'hydrocarbures liquides dans des canalisations comprenant l'injection du réactif selon la revendication 3 dans l'écoulement de fluide d'hydrocarbures transporté à travers la canalisation, dans lequel l'injection du réactif est effectuée au moyen d'un appareil d'injection pour des poudres de polymère.

5. Procédé selon la revendication 4, dans lequel le réactif est dissous dans le fluide d'hydrocarbures avant d'être injecté dans la canalisation.

6. Procédé d'injection du réactif selon la revendication 3 dans l'écoulement d'un fluide d'hydrocarbures transporté à travers une canalisation, dans lequel le réactif est introduit dans une trémie de mélange, puis le réactif avec le fluide d'hydrocarbures, qui est alimenté depuis la canalisation par l'intermédiaire d'une vanne, d'un débitmètre et d'un réducteur de pression, passe d'un distributeur à vis à travers un mélangeur hydrocyclone et une soupape de contre-pression à un réservoir de préparation pour dissoudre le réactif, puis le réactif dissous est introduit à travers le débitmètre à l'aide d'une pompe à engrenages de retour dans la canalisation.

reagent

FIG.1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2481357 C1
- EA 001538
- US 7271205 B

- RU 2599986
- RU 2648079 C1